# FASCICULE DE BREVET EUROPEEN

(11) **EP 0 403 346 B1**
(45) Date de publication et mention de la délivrance du brevet: **15.09.1993**
(21) Numéro de dépôt: 90401586.4
(22) Date de dépôt: 11.06.1990
(51) Int. Cl.: A01G 27/00

(54) **Nappe de subirrigation**
Bewässerungsmatte
Sub-irrigation sheet

(30) Priorité: 12.06.1989 FR 8907707
(43) Date de publication de la demande: 19.12.1990
(73) Titulaire: ISOVER SAINT-GOBAIN, F-92400 Courbevoie (FR)
(72) Inventeur: Basin, Gérard, F-60600 Clermont (FR); De Graaf, Martien, Vijfhuizen (NL)
(74) Mandataire: Le Vaguerèse, Sylvain Jacques

(56) Documents cités:
- EP-A- 0 155 143
- EP-A- 0 201 426
- US-A- 4 219 600

## Description

L'invention est relative à de nouvelles nappes de matériau fibreux utilisés pour l'irrigation en horticulture. De manière plus précise, les nappes selon l'invention conduisent la solution d'irrigation à la base des milieux de cultures et particulièrement de pots lors de la croissance en serre de fleurs ou plants divers.

Des nappes d'irrigation pour l'horticulture à base de produits fibreux ont été proposées antérieurement. Il s'agit par exemple de produits constitués avec des déchets de fibres cellulosiques. Il s'agit aussi de produits formés de déchets de fibres textiles synthétiques. Ces produits ne répondent pas toujours aux caractéristiques souhaitées. Pour ce qui concerne les fibres cellulosiques, elles présentent l'inconvénient de se décomposer au cours des utilisations prolongées. Les matériaux fibreux synthétiques sont eux inaltérables mais ils "conduisent" mal les solutions d'irrigation en raison de leur caractère général hydrophobe.

Il a été également proposé dans le document EP-A-0 155 143 de constituer des systèmes d'irrigation comprenant une nappe de fibres minérales associée avec une feuille munie de canaux s'étendant sur toute la surface à irriguer, la solution se distribuant par ces canaux.

L'invention a donc pour but de fournir une nappe d'irrigation qui soit à la fois imputrescible, bien hydrophile et ne requérant pas l'utilisation d'autres moyens que la nappe elle-même. Les nappes selon l'invention sont constituées de "voiles" de fibres de verre du type formé de fibres discontinues non tissées et qui sont utilisés pour renforcer certains matériaux. Nous verrons dans la suite les caractéristiques particulières que doivent présenter les produits selon l'invention, tous les "voiles" ne répondant pas à ces conditions. De façon générale, ces voiles se caractérisent par la réunion de longues fibres de verre en une nappe de faible épaisseur au moyen d'un agent liant.

Le choix de fibres relativement longues offre au moins deux avantages. Le premier tient à la résistance du voile. S'agissant d'un matériau "léger" et qui doit être utilisé en éléments de dimensions importantes (par exemple 1 à 2 m de large sur 5 à 10 m de long), il est nécessaire, aussi bien au cours de son installation qu'ultérieurement au cours de la culture, qu'il présente une bonne résistance à la traction. La longueur des fibres, toutes choses égales par ailleurs, améliore la résistance. Le second avantage se rapporte à la quantité de liant nécessaire pour conserver toute sa cohésion à la nappe. Avec des fibres longues, une quantité de liant relativement faible peut suffire, ce qui est favorable comme nous le verrons pour conserver au produit un caractère hydrophile important.

La nappe d'irrigation selon l'invention est de faible épaisseur. Elle n'est pas supérieure à 10 mm. Des épaisseurs supérieures sont également utilisables mais ne sont pas recherchées. Elles ne correspondraient pas aux nécessités que l'on s'efforce de satisfaire au moyen de ces nappes d'irrigation. A ce propos, il convient dès à présent de souligner le rôle de ces nappes. Elles ne sont pas en elles-mêmes le "réservoir", même si elles renferment une certaine quantité de solution d'irrigation, mais le moyen d'acheminement et de distribution de cette solution en tout point d'une surface qui peut être très étendue. La quantité de solution contenue dans la nappe doit être suffisante pour assurer en permanence l'irrigation de tous les pots répartis sur la surface de la nappe. Elles ne sont pas non plus le siège du développement des racines des plantes pour la culture desquelles elles sont utilisées. Pour ces raisons le "volume" de la nappe, en dehors de la quantité de solution qu'il permet de retenir, n'est pas un élément qui joue un rôle direct dans l'intérêt de ce type de produit. Par ailleurs, pour des raisons évidentes de stockage et de transport, un volume aussi réduit que possible est préférable.

Les caractéristiques les plus délicates à réunir pour ces nappes d'irrigation sont, d'une part l'hydrophilie jointe à la non-toxicité et, d'autre part, le fait de ne pas se prêter à la croissance des racines. Voyons ces deux caractéristiques de façon plus détaillée.

Le rôle "d'irrigation" doit être très clairement distingué de celui qui est joué par certains matériaux de "culture" constitués également de fibres de verre, par exemple ceux décrits dans le document antérieur EP-A-201 426. Dans ce dernier cas, la plante plonge ses racines dans le matériau lui-même. Pour cette raison, un bon développement de la plante passe normalement par un volume qui donne à celle-ci la capacité d'étendre ses racines. Il faut simultanément un volume en rapport avec celui du système racinaire et un milieu qui est propice à la pénétration des racines. De façon simplifiée, on peut dire que la porosité du matériau doit être suffisante pour que les racines puissent s'insérer dans le matériau et occuper une part importante des pores de celui-ci.

Dans le cas des nappes d'irrigation, les fonctions remplies sont très différentes même si à la base on retrouve un composé de fibres de verre liées entre elles. Il s'agit en effet, pour ces produits, d'avoir une porosité suffisante pour permettre l'acheminement de la solution par capillarité mais, avantageusement, cette porosité est telle qu'elle ne favorise pas la pénétration des racines. Il est aisé de comprendre qu'à l'issue de la période de culture sur la nappe d'irrigation, il est nécessaire de retirer les pots, ou les milieux sur lesquels la culture est développée, sans casser le système racinaire. Pour cela, les racines ne doivent pas être passées du milieu de culture à la nappe d'irrigation.

Les moyens dont dépend l'aptitude du matériau à s'opposer à la pénétration des racines sont étroitement liés au caractère hydrophile. Il s'agit de la structure même des voiles. Ceux-ci sont préparés suivant des techniques traditionnelles notamment par voie sèche, technique présentée par exemple dans le brevet français publié sous le n° 2 519 036.

Dans cette dernière technique, les fibres recueillies sur un convoyeur perméable, immédiatement après leur étirage, sont enduites d'une solution de liant qui est déversée en continu sous forme d'un rideau qui s'étend sur toute la largeur du convoyeur. Dans ce mode, les fibres sont pratiquement "immergées" dans la solution ou suspension du liant. Le mode d'application utilisé explique que le liant ne se localise pas uniquement de façon ponctuelle sur les fibres et notamment aux points de contact entre elles. La solution de liant peut fermer l'espace délimité par plusieurs fibres par la formation d'une sorte d'opercule constitué d'une lamelle de liant. De façon imagée, on peut se représenter la surface du voile comme un amas de fibres dont la porosité aurait été réduite par la présence du liant.

Le fait que la porosité superficielle soit réduite n'entraîne pas cependant que l'hydrophilie du produit soit compromise. En premier, il convient de souligner que la répartition du liant dont il a été question précédemment n'implique pas nécessairement que sa teneur soit accrue. Il s'agit plus d'un mode de répartition (formation de films très minces plus que de gouttelettes) que d'une modification des proportions fibres/liant. La porosité globale et donc l'aptitude à recevoir la solution d'irrigation de la masse fibreuse n'est donc pas nécessairement modifiée par rapport à celle de matelas fibreux préparés et liés suivant d'autres techniques que celle des voiles. En second lieu, l'hydrophilie plus ou moins marquée des voiles ne dépend pas que de la teneur en liant mais aussi et surtout de sa nature. Une composition de liant à caractère hydrophile peut être introduite en proportion très élevée sans pour autant compromettre l'hydrophilie du voile.

Si dans le domaine des feutres de verre d'isolation les liants sont pratiquement toujours à base de résines phénol-formaldéhyde ou urée-formaldéhyde pour les voiles, les compositions sont très variables. Parmi ces compositions, nombreuses sont celles qui comprennent de l'amidon en proportion qui peut aller jusqu'à 80 % et plus. Le choix de l'amidon est fonction de son coût relativement faible par rapport aux autres composants et de sa solubilité dans l'eau qui facilite son application. Si pour les applications traditionnelles des voiles à forte teneur en amidon sont satisfaisants, il n'en est pas de même dans l'application visée selon l'invention. Il est en effet nécessaire, comme pour les fibres elles-mêmes, que le liant soit imputrescible ce qui n'est pas le cas des liants à très forte teneur en amidon. Ceci n'exclut pas l'utilisation de liant dont la proportion d'amidon reste relativement faible, par exemple inférieure à 40 %. Pour ces liants la combinaison avec d'autres constituants, en particulier lorsque ces derniers réagissent avec l'amidon, stabilise l'amidon de façon suffisante pour que l'on puisse considérer que globalement le produit est imputrescible.

Les voiles utilisés sont produits en liant les fibres avec un liant imputrescible et, de préférence, soluble dans l'eau ou au moins émulsifiable. L'utilisation de latex est intéressante à cet usage. Les voiles liés par des latex offrent une résistance mécanique et une souplesse qui facilitent à la fois leur stockage et leur mise en oeuvre. Si les latex sont normalement hydrophobes et donc défavorables aux propriétés recherchées pour les produits d'irrigation, on constate que le mode d'application de ces produits conduit à des voiles qui ont gardé leur caractère hydrophile. En effet, les latex sont appliqués en émulsion. Il apparaît que, pour maintenir la stabilité de ces émulsions, on ajoute dans la composition aqueuse des agents tensio-actifs qui se fixent sur les fibres en même temps que le latex de telle sorte que les produits résultants restent bien hydrophiles. Dans tous les cas cependant, la teneur en agent mouillant reste faible et très inférieure au seuil de toxicité que cet agent peut, le cas échéant, présenter.

A titre indicatif, le taux d'agent mouillant dans les constituants "secs" du liant se situe à environ 2 à 5 % en poids, soit compte tenu de la proportion pondérale du liant par rapport à la masse totale du voile de l'ordre de 0,1 à 0,7 % de cette dernière. Les agents mouillants utilisés pour la préparation des liants servant à la fabrication des nappes d'irrigation selon l'invention sont, de préférence, du type non-ionique dans la mesure où beaucoup de ces agents sont connus pour leur non-phytotoxicité.

Dans les nappes d'irrigation selon l'invention, le taux de liant s'établit ordinairement entre 5 et 20 % et, de préférence, entre 5 et 15 % en poids. La teneur en liant est partiellement dépendante du grammage du voile. De façon générale plus le grammage est faible, autrement dit plus les fibres sont fines, plus toutes proportions gardées, le taux de liant est élevé et inversement.

Des latex avantageux selon l'invention sont ceux à base de butadiène-styrène. D'autres liants répondent aux caractères de non-toxicité et de non-hydrophobie (au moins en présence de légères quantités d'agent tensio-actif) sont également utilisables notamment des liants à base de résines acryliques, des liants mélangés latex-résine formo-phénolique, latex-urée-phénolique, polyester-amidon.

Le choix du liant n'est pas le seul facteur qui intervient dans l'aptitude des racines à pénétrer dans la nappe d'irrigation. Le réseau des fibres qui constituent le voile est également un facteur important.

Les fibres de verre qui forment ces voiles ont un diamètre typique de l'ordre de 10 à 16 micromètres. Elles sont enchevêtrées en un ensemble légèrement foisonnant, mais sur une épaisseur dont nous avons dit qu'il ne dépasse pas ordinairement 10 mm et se situe le plus souvent entre 2 et 5 mm. Une épaisseur plus grande est possible mais renchérit le produit en proportion de la quantité de fibres supplémentaires qu'il contient sans que ses qualités pour l'irrigation en soient améliorées.

Le voile doit présenter un maillage suffisamment serré pour assurer sa solidité mais surtout pour offrir la porosité qui favorise la capillarité tout en s'opposant à la pénétration des racines. La quantité de fibres nécessaire par unité de surface est telle que le voile présente un grammage qui est compris entre 50 g/m² et 300 g/m². La valeur inférieure est commandée par les impératifs indiqués précédemment : résistance, capillarité ; la valeur supérieure est plus commandée par les considérations de coût.

Les nappes d'irrigation sont utilisées traditionnellement sur des supports bien horizontaux, dans toute la mesure du possible. Ceci est d'autant plus nécessaire que l'aptitude à la capillarité de la nappe est moins bonne. Si en effet l'ascension capillaire de la solution dans la nappe est insuffisante, un défaut d'horizontalité se traduit par un "assèchement" de la nappe dans ses parties les plus hautes. Les nappes d'irrigation selon l'invention, en offrant une bonne capillarité, permettent d'opérer sur un support présentant quelques écarts d'horizontalité. Les nappes d'irrigation préférées offrent une ascension capillaire qui n'est pas inférieure à 30 mm et, de préférence, au moins de 40 mm.

L'utilisation s'effectue d'ordinaire sur de larges tables à hauteur de travail. Il s'agit en effet, le plus souvent, de travaux qui réclament de nombreuses interventions au cours de la culture. Néanmoins, la nappe d'irrigation peut être posée à même le sol si les conditions de culture s'y prêtent.

L'alimentation en solution d'irrigation, notamment sur les nappes traditionnelles constituées de fibres synthétiques peu hydrophiles, s'effectue au moyen de dispositifs goutte à goutte. Par ces dispositifs, la solution est conduite à proximité des plants, des pots ou, de façon générale, des substrats de culture portant les plants. L'excès de solution s'élimine par drainage.

Ce mode d'alimentation nécessite une installation relativement compliquée en raison notamment de la multiplicité des points d'apport de la solution. L'utilisation de la nappe d'irrigation selon l'invention qui permet une bonne répartition de la solution du fait de la forte capillarité du voile utilisé, permet une alimentation goutte à goutte beaucoup plus espacée.

Il est possible également, en jouant des phénomènes de capillarité, de faire fonctionner la nappe comme une mèche. Dans ce cas, un côté de la nappe plonge dans une gouttière ou rigole longeant la table de travail ou le plan sur lequel la nappe est déposée. La gouttière est remplie de la solution d'irrigation située légèrement en contrebas par rapport au plan de la table.

Par ces moyens l'alimentation de la nappe s'effectue au fur et à mesure de la consommation, sans qu'il soit nécessaire de faire circuler un excès de solution. Cette disposition requiert, bien entendu, un voile bien homogène et une surface qui, par rapport au niveau de la solution, ne se situe pas au-dessus de la hauteur correspondant à la capillarité mesurée pour la nappe considérée, faute de quoi les parties les plus "hautes" du plan ne pourraient être alimentées de façon régulière.

En pratique, les nappes d'irrigation sont principalement utilisées pour la culture des plantes en pots pour les jeunes plants, mais cette technique peut être appliquée dans toutes les techniques horticoles dans lesquelles la culture est conduite sur un substrat de faibles dimensions capable de prélever la solution d'irrigation par sa base. Le contact de la base du substrat de culture avec la nappe d'irrigation doit être suffisant pour permettre à la solution de monter dans le substrat par capillarité. Lorsque l'on conduit la culture sur des pots, il est nécessaire que le fond de ceux-ci soit suffisamment "ouvert". La culture peut être aussi conduite sur des substrats artificiels notamment sur ce que l'on désigne sous le nom de "cubes". Ces "cubes" sont, en particulier, constitués de fibres minérales de laine de roche ou laine de verre convenablement choisies et agencées. Le substrat "cube" peut être aussi une mousse de polymère, notamment de mousse phénolique. Il peut s'agir aussi de cubes de matériaux naturels, comme ceux constitués de tourbe. Dans le cas de ces cubes, la face inférieure du substrat est en contact avec la nappe d'irrigation. Dans ce cas particulièrement, la surface de contact étant relativement importante, il est avantageux comme indiqué précédemment de faire en sorte que les racines ne passent pas du substrat dans la nappe d'irrigation.

La nappe d'irrigation selon l'invention est utilisable aussi dans les techniques de culture dites "cultures en gouttières". Dans ces techniques, les plants sont cultivés sur des cubes posés sur une "gouttière" dans laquelle circule la solution d'irrigation. La gouttière est formée d'une surface allongée légèrement inclinée dans le sens de la longueur. Cette surface est couverte d'un film imperméable sur lequel la solution ruisselle en continu. Les cubes de culture sont répartis sur cette surface et absorbent la solution à leur base. Pour que tous les cubes soient bien irrigués, il est nécessaire d'avoir une solution recouvrant toute la surface à irriguer. En fait, cette distribution est difficile à maintenir, la solution tendant à se diviser en filets irréguliers. La mise en place d'une nappe d'irrigation selon l'invention sur la "gouttière" permet de rétablir une distribution satisfaisante.

## Revendications

1. Nappe d'irrigation d'horticulture pour l'alimentation en solution d'irrigation des substrats de culture disposés sur ladite nappe, constituée d'un voile non tissé de fibres de verre discontinues liées entre elles au moyen d'un liant non toxique et non hydrophobe ou rendu tel, au moyen d'agents tensio-actifs non toxiques, le voile présentant une masse par mètre carré de surface, ou grammage, compris entre 50 et 300 g/m² et une épaisseur inférieure à 10 mm.

2. Nappe d'irrigation selon la revendication 1 dans laquelle les fibres constitutives ont un diamètre moyen compris entre 10 et 16 micromètres.

3. Nappe d'irrigation selon la revendication 1 dont l'épaisseur est comprise entre 2 et 5 mm.

4. Nappe d'irrigation selon la revendication 1 dans laquelle les fibres sont liées au moyen d'un liant imputrescible et non toxique du type latex.

5. Nappe d'irrigation selon la revendication 4 dans laquelle le liant est à base d'un latex de butadiènestyrène.

6. Nappe d'irrigation selon la revendication 1 dans laquelle la teneur en liant est comprise entre 5 et 20 % en poids de la nappe, la teneur étant d'autant plus faible que le grammage est plus élevé.

7. Nappe d'irrigation selon la revendication 1 dont le voile est choisi parmi ceux présentant une ascension capillaire d'au moins 30 mm.

## Patentansprüche

1. Bewässerungsmatte für den Gartenbau für die Versorgung der auf dieser Matte aufgestellten Kultursubstrate mit Nährlösung, welche aus einer nicht gewebten Faserbahn von in begrenzter Länge vorliegenden Glasfasern besteht, welche untereinander mit Hilfe eines nicht-toxischen und nicht-hydrophoben oder mittels eines nicht-toxischen Benetzungsmittels nicht-hydrophob ausgerüsteten Bindemittels gebunden sind, wobei die Bahn eine Masse je Quadratmeter Fläche bzw. ein Flächengewicht zwischen 50 und 300 g/m² und eine geringere Dicke als 10 mm aufweist.

2. Bewässerungsmatte nach Anspruch 1, in welcher die darin enthaltenen Fasern einen mittleren Durchmesser zwischen 10 und 16 µm aufweisen.

3. Bewässerungsmatte nach Anspruch 1 mit einer Dicke zwischen 2 und 5 mm.

4. Bewässerungsmatte nach Anspruch 1, worin die Fasern mit Hilfe eines nicht-faulenden und nicht-toxischen Bindemittels vom Typ Latex gebunden sind.

5. Bewässerungsmatte nach Anspruch 4, worin das Bindemittel auf Basis eines Latex aus Styrol-Butadien ist.

6. Bewässerungsmatte nach Anspruch 1, worin der Bindemittelgehalt zwischen 5 und 20% des Bahngewichts beträgt, und zwar um so geringer ist, je höher das Flächengewicht ist.

7. Bewässerungsmatte nach Anspruch 1, für welche die Bahn unter denjenigen gewählt wird, die eine Kapillaraszension von mindestens 30 mm aufweisen.

## Claims

1. Horticultural irrigation mat for supplying irrigation solution to culture substrates disposed on the said mat, consisting of a non-woven sheet made of glass fibres bonded to one another by means of a binder which is non-toxic and non-water repellent, or is rendered such by means of non-toxic surfactants, the sheet having a volume per square metre of surface of gsm substance of between 50 and 300 g/m² and a thickness of less than 10 mm.

2. Irrigation mat according to Claim 1, in which the constituent fibres have an average diameter of between 10 and 16 microns.

3. Irrigation mat according to Claim 1, of which the thickness is between 2 and 5 mm.

4. Irrigation mat according to Claim 1, in which the fibres are bonded by means of a rot-proof, non-toxic binder of the latex type.

5. Irrigation mat according to Claim 4, in which the binder is based on a butadiene styrene latex.

6. Irrigation mat according to Claim 1, in which the binder content is between 5 and 20% by weight of the mat, the content being all the lower the higher the gsm substance.

7. Irrigation mat according to Claim 1, of which the sheet is selected from amongst those having capillary ascension of at least 30 mm.
